# EUROPÄISCHE PATENTANMELDUNG

(11) **EP 4 382 457 A1**
(43) Veröffentlichungstag der Anmeldung: **12.06.2024**
(21) Anmeldenummer: 23214279.4
(22) Anmeldetag: 05.12.2023
(51) Int. Cl.: B65G 21/20, F16P 3/14

(54) **GEMEINSAME GELÄNDERVERSTELLUNG MEHRERER TRANSPORTVORRICHTUNGEN**

(30) Priorität: 09.12.2022 DE 102022132756
(71) Anmelder: KRONES AG, 93073 Neutraubling (DE)
(72) Erfinder: HENNEK, Heinz, 93073 Neutraubling (DE)
(74) Vertreter: v. Bezold & Partner Patentanwälte - PartG mbB

(57) **Zusammenfassung**

Die Erfindung betrifft u.a. eine Anlage (10) aufweisend mehrere Transportvorrichtungen (14) zum Transportieren von Gegenständen durch die Anlage (10), wobei die mehreren Transportvorrichtungen (14) verteilt in der Anlage (10) angeordnet sind und jeweils mindestens ein verstellbares Geländer (16) zur Transportbreiteneinstellung aufweisen. Ein Sensorsystem (20) ist dazu ausgebildet, mehrere Überwachungsbereiche (22), die sich jeweils entlang eines der mehreren verstellbaren Geländer (16) erstrecken, zur Personenerkennung zu überwachen. Eine Verarbeitungseinrichtung (26) ist dazu konfiguriert, die mehreren Transportvorrichtungen (14) zum gemeinsamen Verstellen der verstellbaren Geländer (16) in Abhängigkeit der Überwachung der mehreren Überwachungsbereiche (22) mittels des Sensorsystems (20) zu betreiben. Vorteilhaft kann die Anlage (10) eine sichere und automatisierte, zentrale Verstellung aller Geländer (16) der Anlage (10) ermöglichen.

## Beschreibung

### Technisches Gebiet

Die Erfindung betrifft eine Anlage, vorzugsweise Industrieanlage, besonders bevorzugt Behälterbehandlungsanlage. Die Erfindung betrifft ferner ein Verfahren zum Betreiben einer Anlage, vorzugsweise Industrieanlage, besonders bevorzugt Behälterbehandlungsanlage.

### Technischer Hintergrund

Behälterbehandlungsanlagen und andere Anlagen sollen heute und zukünftig möglichst flexibel betreibbar sein. Ein Teilaspekt hierbei ist, dass nach Möglichkeit Gegenstände, wie bspw. Behälter, mit unterschiedlichen Größen und/oder Formaten auf derselben Anlage behandelt werden können. In diesem Zusammenhang können bspw. Transportvorrichtungen in solchen Anlagen verstellbare Geländer aufweisen, mit denen sich eine Transportbreite der Transportvorrichtungen zum Anpassen an unterschiedlich dimensionierte und/oder geformte Gegenstände verstellen lässt.

Die WO 2008/052212 A2 offenbart eine Baugruppe zur Positionierung von Seitenschienen für einen Förderer zur Handhabung von Gegenständen, der sich in einer Förderrichtung erstreckt. Die Baugruppe umfasst einen Rahmen, zwei Seitenschienen, die beweglich an dem Rahmen auf gegenüberliegenden Seiten des Förderers angebracht sind und sich entlang der Förderrichtung erstrecken, wobei jede Seitenschiene ein Eingangszahnrad umfasst. Ein Getriebezug erstreckt sich zwischen einem Stellglied und dem mindestens einen Eingangszahnrad, wodurch die Bewegung des Stellglieds in die eine oder andere Richtung die Seitenschienen gleichzeitig über den Getriebezug und das Eingangszahnrad aufeinander zu oder voneinander wegbewegt. Es können mehrere Schienenbaugruppen entlang eines Förderers, über verschiedene Seiten eines Förderers und entlang oder über verschiedene Förderer eingesetzt werden. Die mehreren Baugruppen können von einem gemeinsamen Steuergerät gesteuert werden.

Der Erfindung liegt die Aufgabe zu Grunde, eine verbesserte Technik zum Verstellen der Geländer zu schaffen. Vorzugsweise soll die Technik eine sichere und gemeinsame Verstellung möglichst aller verstellbaren Geländer einer Anlage ermöglichen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenbarung betrifft eine Anlage, vorzugsweise Industrieanlage, besonders bevorzugt Behälterbehandlungsanlage. Die Anlage weist mehrere Transportvorrichtungen zum Transportieren von Gegenständen, vorzugsweise Behältern, durch die Anlage auf. Die mehreren Transportvorrichtungen sind verteilt in der Anlage angeordnet und weisen jeweils mindestens ein verstellbares Geländer zur Transportbreiteneinstellung auf. Die Anlage weist ein Sensorsystem auf, das dazu ausgebildet ist, mehrere Überwachungsbereiche, die sich jeweils entlang eines der mehreren verstellbaren Geländer erstrecken (und damit bspw. dem jeweiligen Geländer zugeordnet sind), zur Personenerkennung (z. B. durch Bilderkennung, Bewegungserkennung, Temperaturerkennung und/oder Akustikerkennung) zu überwachen. Die Anlage weist eine Verarbeitungseinrichtung auf, die dazu konfiguriert ist, die mehreren Transportvorrichtungen zum gemeinsamen Verstellen der verstellbaren Geländer in Abhängigkeit der Überwachung der mehreren Überwachungsbereiche mittels des Sensorsystems zu betreiben (z. B. zu steuern).

Vorteilhaft kann die Anlage eine sichere und gemeinsame, zentrale Verstellung der mehreren Geländer ermöglichen. Vorzugsweise können durch die Überwachungsbereiche die Verstellbereiche der Geländer überwacht werden. Die Geländerverstellung kann damit vollständig automatisiert werden und muss bspw. nicht dezentral für jede Transportvorrichtung einzeln ausgelöst werden. Sofern eine Person im Überwachungsbereich erkannt wird, kann die gemeinsame Verstellung bspw. gar nicht erst ausgelöst oder gestoppt werden, um eine Verletzungsgefahr (z. B. Quetschgefahr) für die Person durch die Verstellung zu verringern. Durch den automatisierten Ablauf können vorteilhaft ebenfalls menschliche Bedienfehler ausgeschlossen werden. Es ist auch nicht erforderlich, Einhausung oder ähnliche Schutzmaßnahmen für die Transportvorrichtungen vorzusehen, um eine sichere, gemeinsame Verstellung der Geländer zu ermöglichen. Dadurch können letztlich Zeit und Kosten eingespart werden.

In einem Ausführungsbeispiel ist die Verarbeitungseinrichtung ferner dazu konfiguriert, die verstellbaren Geländer nur dann zum gemeinsamen Verstellen zu betreiben, wenn keine Person in den mehreren Überwachungsbereichen mittels des Sensorsystems erkannt wurde. Vorteilhaft kann damit ein Verletzungsrisiko für Arbeiter in der Anlage wesentlich verringert werden.

In einem weiteren Ausführungsbeispiel ist die Verarbeitungseinrichtung ferner dazu konfiguriert, nur diejenigen verstellbaren Geländer zum gemeinsamen Verstellen zu betreiben, in deren (zugeordneten) Überwachungsbereichen keine Person mittels des Sensorsystems erkannt wurde. Alternativ oder zusätzlich ist die Verarbeitungseinrichtung ferner dazu konfiguriert, immer nur diejenigen verstellbaren Geländer zum gemeinsamen Verstellen zu betreiben, in deren (zugeordneten) Überwachungsbereichen gerade keine Person mittels des Sensorsystems erkannt wird, bis letztlich alle verstellbaren Geländer verstellt wurden. Vorteilhaft können damit zumindest diejenigen Geländer gemeinsam verstellt werden, in deren Nähe sich keine Personen befinden. Gerade bei sehr großen Anlagen kann es nämlich vorkommen, dass immer zumindest ein Arbeiter in der Anlage unterwegs ist und somit die gemeinsame Verstellung aller Geländer blockieren könnte, wenn immer alle Überwachungsbereiche gleichzeitig frei von Personen sein müssten. Vorteilhaft kann somit insgesamt eine Zeitdauer, bis tatsächlich alle Geländer verstellt sind, verringert werden, ohne dass dadurch das Verletzungsrisiko erhöht wird.

In einer Ausführungsform weist die Anlage ferner mindestens eine Ausgabeeinrichtung zum Ausgeben von (z. B. akustischen und/oder visuellen) Warnsignalen zu den mehreren Überwachungsbereichen auf. Vorzugsweise kann die Verarbeitungseinrichtung ferner dazu konfiguriert sein, die mindestens eine Ausgabeeinrichtung zum Ausgeben eines (z. B. ersten) Warnsignals vor und/oder während des gemeinsamen Verstellens der verstellbaren Geländer zu betreiben. Alternativ oder zusätzlich kann die Verarbeitungseinrichtung ferner dazu konfiguriert sein, die mindestens eine Ausgabeeinrichtung zum Ausgeben eines (z. B. zweiten) Warnsignals bei Erkennung einer Person in einem der mehreren Überwachungsbereiche zu betreiben. Vorteilhaft können auf diese Weise Personen gewarnt werden, sich nicht zu nähern, wenn die Geländer verstellt werden, oder sich zu entfernen, wenn die Geländer verstellt werden sollen.

Vorzugsweise können sich das erste Warnsignal und das zweite Warnsignal voneinander unterscheiden, z. B. in Bezug auf eine Lautstärke, einen Inhalt und/oder eine Position.

In einer weiteren Ausführungsform ist die Verarbeitungseinrichtung ferner dazu konfiguriert, das gemeinsame Verstellen der verstellbaren Geländer zu stoppen, wenn während des gemeinsamen Verstellens eine Person in einem der mehreren Überwachungsbereiche mittels des Sensorsystems erkannt wird. Vorteilhaft kann damit verhindert werden, dass eine Person, die bei der Initialisierung des gemeinsamen Verstellens der Geländer noch nicht im Überwachungsbereich war, sich später durch unachtsames Eindringen in den Überwachungsbereich an den sich verstellenden Geländern verletzt.

In einer weiteren Ausführungsform ist die Verarbeitungseinrichtung ferner dazu konfiguriert, während des gemeinsamen Verstellens der verstellbaren Geländer ein Verstellen nur für dasjenige verstellbare Geländer, vorzugsweise temporär, zu stoppen, in dessen (zugeordneten) Überwachungsbereich eine Person während des Verstellens mittels des Sensorsystems erkannt wird, und vorzugsweise fortzusetzen, wenn mittels des Sensorsystems erkannt wurde, dass die Person dessen (zugeordneten) Überwachungsbereich wieder verlassen hat. Wie bereits an einem anderen Beispiel erläutert, kann somit vorteilhaft insgesamt eine Zeitdauer, bis tatsächlich alle Geländer verstellt sind, verringert werden, ohne dass dadurch das Verletzungsrisiko erhöht wird.

In einer Ausführungsvariante ist die Verarbeitungseinrichtung ferner dazu konfiguriert, die mehreren Transportvorrichtungen zum Transportieren von Gegenständen, vorzugsweise Behältern, unabhängig von dem Überwachen der mehreren Überwachungsbereiche mittels des Sensorsystems zu betreiben. Alternativ oder zusätzlich kann die Verarbeitungseinrichtung ferner dazu konfiguriert sein, das Sensorsystem zum Überwachen der mehreren Überwachungsbereiche zu aktivieren, wenn die Verarbeitungseinrichtung eine Anweisung zum Verstellen der verstellbaren Geländer empfängt, vorzugsweise von einer Benutzerschnittstelle. Alternativ oder zusätzlich kann die Verarbeitungseinrichtung dazu konfiguriert sein, das Sensorsystem zum Beenden des Überwachens der mehreren Überwachungsbereiche zu deaktivieren, wenn ein gemeinsames Verstellen der verstellbaren Geländer (z. B. erfolgreich) beendet wurde. Vorteilhaft kann damit ein Normalbetrieb bzw. Transportbetrieb unbeeinflusst durch die Überwachung ablaufen, die insbesondere nur für die automatisierte Verstellung genutzt werden kann. Somit können im Normalbetrieb Personen durch die Anlage gehen und bspw. Fehler innerhalb der Überwachungsbereiche beheben (z. B. verklemmte Flasche), ohne dass es dadurch zu einer zusätzlichen Warnung oder gar Sicherheitsstilllegung der Anlage kommt. Durch die Deaktivierung kann vorteilhaft zudem Energie eingespart werden.

Ein weiterer Aspekt der vorliegenden Offenbarung betrifft ein Verfahren zum Betreiben einer Anlage, vorzugsweise Industrieanlage oder Behälterbehandlungsanlage oder wie hierin offenbart. Das Verfahren weist ein Empfangen einer Anweisung zum Verstellen von verstellbaren Geländern mehrerer Transportvorrichtungen, die verteilt in der Anlage angeordnet sind, mittels einer Verarbeitungseinrichtung (z. B. von einer Benutzerschnittstelle) auf. Das Verfahren weist ferner ein Überwachen von mehreren Überwachungsbereichen, die sich entlang der verstellbaren Geländer erstrecken, mittels eines Sensorsystems zur Personenerkennung (z. B. durch Bilderkennung, Bewegungserkennung, Temperaturerkennung und/oder Akustikerkennung) auf, vorzugsweise in Reaktion auf das Empfangen der Anweisung (z. B. aktiviert durch die Verarbeitungseinrichtung). Das Verfahren weist ferner ein Betreiben (z. B. Ansteuern oder Anweisen) der mehreren Transportvorrichtungen zum gemeinsamen Verstellen der verstellbaren Geländer mittels der Verarbeitungseinrichtung in Abhängigkeit von dem Überwachen der mehreren Überwachungsbereiche und in Reaktion auf das Empfangen der Anweisung auf. Vorteilhaft kann das Verfahren die gleichen Vorteile erzielen, die bereits unter Bezugnahme auf die Anlage beschrieben wurden. Selbiges gilt für die nachfolgenden Ausführungsbeispiele.

In einem Ausführungsbeispiel werden die mehreren Transportvorrichtungen zum gemeinsamen Verstellen der verstellbaren Geländer mittels der Verarbeitungseinrichtung derart betrieben, dass:
- die verstellbaren Geländer nur dann zum gemeinsamen Verstellen betrieben werden, wenn keine Person in den mehreren Überwachungsbereichen mittels des Sensorsystems erkannt wurde; und/oder
- nur diejenigen verstellbaren Geländer zum gemeinsamen Verstellen betrieben werden, in deren (zugeordneten) Überwachungsbereichen keine Person mittels des Sensorsystems erkannt wurde; und/oder
- immer nur diejenigen verstellbaren Geländer zum gemeinsamen Verstellen betrieben werden, in deren (zugeordneten) Überwachungsbereichen gerade keine Person mittels des Sensorsystems erkannt wird, bis letztlich alle verstellbaren Geländer verstellt wurden.

In einem weiteren Ausführungsbeispiel werden die mehreren Transportvorrichtungen zum gemeinsamen Verstellen der verstellbaren Geländer mittels der Verarbeitungseinrichtung derart betrieben, dass:
- das gemeinsame Verstellen der verstellbaren Geländer gestoppt wird, wenn während des gemeinsamen Verstellens eine Person in einem der mehreren Überwachungsbereiche mittels des Sensorsystems erkannt wird; und/oder
- während des gemeinsamen Verstellens der verstellbaren Geländer ein Verstellen nur für dasjenige verstellbare Geländer, vorzugsweise temporär, gestoppt, in dessen (zugeordneten) Überwachungsbereich eine Person während des Verstellens mittels des Sensorsystems erkannt wird, und vorzugsweise fortzusetzen, wenn mittels des Sensorsystems erkannt wurde, dass die Person dessen (zugeordneten) Überwachungsbereich wieder verlassen hat.

In einem weiteren Ausführungsbeispiel weist das Verfahren ferner mindestens eines auf von:
- Betreiben der mehreren Transportvorrichtungen zum Transportieren von Gegenständen, vorzugsweise Behältern, mittels der Verarbeitungseinrichtung unabhängig von dem Überwachen mittels des Sensorsystems;
- Aktivieren des Sensorsystems zum Überwachen der mehreren Überwachungsbereiche mittels der Verarbeitungseinrichtung in Reaktion auf das Empfangen der Anweisung;
- Deaktivieren des Sensorsystems zum Beenden des Überwachens der mehreren Überwachungsbereiche mittels der Verarbeitungseinrichtung in Reaktion auf ein (z. B. erfolgreiches) Beenden des gemeinsamen Verstellens der verstellbaren Geländer;
- Ausgeben eines, vorzugsweise akustischen und/oder visuellen, (z. B. ersten) Warnsignals zu den mehreren Überwachungsbereichen mittels mindestens einer Ausgabeeinrichtung vor und/oder während des gemeinsamen Verstellens der verstellbaren Geländer; und
- Ausgeben eines, vorzugsweise akustischen und/oder visuellen, (z. B. zweiten) Warnsignals mittels mindestens einer Ausgabeeinrichtung bei Erkennung einer Person in einem der mehreren Überwachungsbereiche mittels des Sensorsystems.

In einer Ausführungsform weist das Sensorsystem mindestens eine Kamera-Sensorvorrichtung, mindestens eine Radar-Sensorvorrichtung, mindestens eine Lidar-Sensorvorrichtung, mindestens eine Wärmebildkamera-Sensorvorrichtung, mindestens einen Laser-Sensorvorrichtung, mindestens einen LED-Sensorvorrichtung, mindestens eine Abstandssensorvorrichtung, mindestens eine Bewegungssensorvorrichtung und/oder mindestens ein Mikrofon auf. Vorteilhaft kann damit eine sichere und systematische Überwachung gewährleistet werden. Die Personenerkennung kann bspw. softwarebasiert auf Basis von Ausgangssignalen der Sensorvorrichtung(en) erfolgen. Beispielsweise kann bei einer Wärmebildkamera einer Auswertung der Temperaturprofile der Wärmebildaufnahmen durchgeführt werden, um eine Person zu erkennen.

In einer weiteren Ausführungsform weist das Sensorsystem für jeden Überwachungsbereich mindestens eine Sensorvorrichtung auf. Vorteilhaft kann damit eine besonders sichere Überwachung der Überwachungsbereiche möglich sein.

In einer Ausführungsvariante sind die mehreren Transportvorrichtungen zumindest teilweise mehrgassig, und die verstellbaren Geländer weisen verstellbare Gassengeländer (Innengeländer) der mehrgassigen Transportvorrichtung/-en auf. Alternativ oder zusätzlich weisen die verstellbaren Geländer verstellbare Außengeländer auf.

In einer weiteren Ausführungsvariante ist das Sensorsystem und/oder die Verarbeitungseinrichtung so (z. B. softwaremäßig und/oder hardwaremäßig) konfiguriert, und/oder die mehreren Überwachungsbereiche sind so angeordnet, dass eine Verstellung der verstellbaren Geländer zu keiner Personenerkennung führt. Vorteilhaft kann damit ein Risiko für eine Personenfehlerkennung verringert werden.

In einer weiteren Ausführungsvariante weisen die verstellbaren Geländer jeweils einen Verstellbereich, in dem sie verstellbar sind, auf, und die mehreren Überwachungsbereiche sind so angeordnet, dass sie den Verstellbereichen entsprechen oder diese überdecken. Vorteilhaft kann damit besonders sicher verhindert werden, dass sich Personen an den verstellbaren Geländern verletzten können.

Wie bereits erwähnt, ist die Anlage besonders bevorzugt eine Behälterbehandlungsanlage. Vorzugsweise kann die Behälterbehandlungsanlage zum Herstellen, Reinigen, Beschichten, Prüfen, Abfüllen, Verschließen, Etikettieren, Bedrucken und/oder Verpacken von Behältern für flüssige Medien, vorzugsweise Getränke oder flüssige Nahrungsmittel, ausgebildet sein.

Bevorzugt können die mehreren Transportvorrichtungen eine oder mehrere Behälterbehandlungsvorrichtungen zum Transportieren von Behältern miteinander verbinden.

Beispielsweise können die Behälter als Flaschen, Dosen, Kanister, Kartons, Flakons usw. ausgeführt sein.

Vorzugsweise kann sich der Begriff "Verarbeitungseinrichtung" auf eine Elektronik (z. B. ausgeführt als eine Treiberschaltung oder mit Mikroprozessor(en) und Datenspeicher) und/oder eine mechanische, pneumatische und/oder hydraulische Steuerung beziehen, die je nach Ausbildung Steuerungsaufgaben und/oder Regelungsaufgaben und/oder Verarbeitungsaufgaben übernehmen kann. Auch wenn hierin der Begriff "Steuern" verwendet wird, kann damit gleichsam zweckmäßig auch "Regeln" bzw. "Steuern mit Rückkopplung" und/oder "Verarbeiten" umfasst bzw. gemeint sein.

Die zuvor beschriebenen bevorzugten Ausführungsformen und Merkmale der Erfindung sind beliebig miteinander kombinierbar.

### Kurzbeschreibung der Figur

Weitere Einzelheiten und Vorteile der Erfindung werden im Folgenden unter Bezug auf die beigefügte Zeichnung beschrieben. Es zeigt:

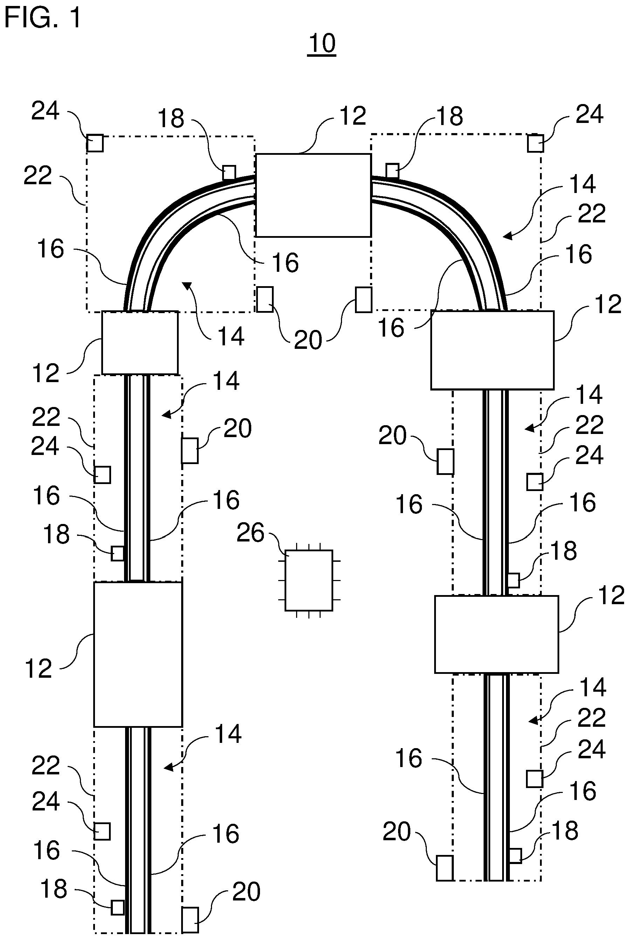

- Figur 1: eine schematische Draufsicht auf eine Anlage gemäß einem Ausführungsbeispiel der vorliegenden Offenbarung.

### Detaillierte Beschreibung beispielhafter Ausführungsformen

Die Figur 1 zeigt eine Anlage 10. Die Anlage 10 weist mehrere Transportvorrichtungen 14, ein Sensorsystem 20 und eine Verarbeitungseinrichtung 26 auf. Die Anlage 10 kann ferner mehrere Behandlungsvorrichtungen 12 und/oder mindestens eine Ausgabeeinrichtung 24 aufweisen.

Die Anlage 10 kann vorzugsweise eine Industrieanlage zum Produzieren und/oder Behandeln von Gegenständen sein. Besonders bevorzugt kann die Anlage 10 eine Behälterbehandlungsanlage zum Behandeln von Behältern sein.

Die Behandlungsvorrichtungen 12 können abhängig von der jeweiligen Art der Anlage 10 ausgeführt sein. Bevorzugt können die Behandlungsvorrichtungen 12 als Behälterbehandlungsvorrichtungen ausgeführt sein.

Beispielsweise können die Behandlungsvorrichtungen 12 eine Behälterherstellvorrichtung (z. B. Behälterblasmaschine), eine Beschichtungsvorrichtung, eine Entpalletiervorrichtung, eine Rinsvorrichtung (z. B. mit Rinsdüsen), eine Sterilisierungsvorrichtung (z. B. mit Sterilisationsdüsen), eine Füllvorrichtung (z. B. mit Füllventilen), eine Verschließvorrichtung (z. B. mit Verschließköpfen), eine Etikettiervorrichtung (z. B. mit Etikettieraggregaten), eine Druckvorrichtung (z. B. mit Druckköpfen), eine Pasteurisiervorrichtung, eine Klebegebindeherstellvorrichtung (z. B. mit Klebstoffapplikationsdüsen), eine Verpackungsvorrichtung (z. B. mit Packköpfen oder Folieneinschlägern) und/oder eine Palettiervorrichtung (z. B. mit Palettierköpfen, Schiebeplatten oder dgl.) aufweisen.

Die Transportvorrichtungen 14 können Gegenstände durch die Anlage 10 fördern. Bevorzugt stützen die Transportvorrichtungen 14 die Gegenstände beim Transport bodenseitig ab. Beispielsweise können die Transportvorrichtungen 14 zumindest teilweise als Bandförderer, z. B. Scharnierbandkettenförderer oder Mattenkettenförderer, oder Plattenförderer ausgeführt sein.

Bevorzugt sind die Transportvorrichtungen 14 als Linearförderer ausgeführt. Es ist möglich, dass die Anlage 10 weitere und/oder anders ausgeführte Transportvorrichtungen aufweist, wie z. B. Transportsterne (nicht in Figur 1 dargestellt).

Die Transportvorrichtungen 14 sind verteilt in der Anlage 10 angeordnet. Die Transportvorrichtungen 14 können separat und beabstandet voneinander angeordnet sein. Beispielsweise können zwei benachbarte Transportvorrichtungen 14 durch eine zwischengeschaltete / dazwischen angeordnete Behandlungsvorrichtung 12 voneinander beabstandet sein.

Die Transportvorrichtungen 14 können jeweils zwischen zwei Behandlungsvorrichtungen 12 angeordnet sein. Die Transportvorrichtungen 14 können jeweils mindestens zwei Behandlungsvorrichtungen 12 miteinander verbinden. Die Transportvorrichtungen 14 können Gegenstände zwischen jeweils zwei Behandlungsvorrichtungen 12 transportieren.

Bevorzugt können die Transportvorrichtungen 14 als Behälterförderer zum Fördern von Behältern durch die Anlage 10 ausgeführt sein. Die Behälterförderer können jeweils mindestens zwei Behälterbehandlungsvorrichtungen miteinander verbinden.

Die Transportvorrichtungen 14 weisen jeweils mindestens ein verstellbares Geländer 16 zur Transportbreiteneinstellung auf. Die Geländer 16 können Außengeländer der Transportvorrichtungen 14 aufweisen, wie schematisch in Figur 1 dargestellt ist. Alternativ oder zusätzlich ist es ebenfalls möglich, dass die Transportvorrichtungen 14 mehrgassig sind und die Geländer 16 als Innengeländer/Gassengeländer ausgeführt sind. Es ist auch möglich, dass die Transportvorrichtungen 14 eingassig bzw. einspurig sind.

Bevorzugt weisen die Transportvorrichtungen 14 jeweils mindestens zwei verstellbare Geländer 16 auf, die einander gegenüberliegen und/oder parallel zueinander verlaufen.

Die Geländer 16 können bspw. stabförmig, schienenförmig oder plattenförmig sein. Die Geländer 16 können sich entlang eines durch die jeweilige Transportvorrichtung 14 vorgegebenen Transportpfads für die zu transportierenden Gegenstände erstrecken. Die Geländer 16 können zumindest teilweise geradlinig und/oder zumindest teilweise gebogen sein. Die Geländer 16 können die Gegenstände während des Transports seitlich führen.

Die Geländer 16 können quer zu einer Transportrichtung der jeweiligen Transportvorrichtung 14 verstellbar sein. Beispielsweise können die Geländer 16 quer zu einer Längsachse der jeweiligen Transportvorrichtung 14 verstellbar sein. Bevorzugt sind die Geländer 16 horizontal verstellbar. Es ist auch möglich, dass die Geländer 16 vertikalverstellbar sind.

Bei der Verstellung der Geländer 16 einer Transportvorrichtung 14 können diese beispielsweise aufeinander zubewegt werden. Beispielsweise kann dadurch eine Gesamttransportbreite oder eine Transportgassenbreite der jeweiligen Transportvorrichtung 14 verkleinert werden. Bei der Verstellung der Geländer 16 können diese andererseits voneinander bewegt werden. Beispielsweise kann dadurch eine Gesamttransportbreite oder eine Transportgassenbreite der jeweiligen Transportvorrichtung 14 vergrößert werden.

Eine Verstellung der Geländer 16 kann durch eine Antriebseinrichtung 18 der jeweiligen Transportvorrichtung 14 bewirkt sein. Die Antriebseinrichtung 18 kann trieblich mit dem mindestens einen Geländer 16 der jeweiligen Transportvorrichtung 14 verbunden sein. Beispielsweise können die Antriebseinrichtung 18 und das mindestens eine Geländer 16 der jeweiligen Transportvorrichtung 14 mittels eines Getriebes miteinander verbunden sein. Beispielsweise kann die Antriebseinrichtung 18 als ein Elektroantrieb ausgeführt sein.

Das Sensorsystem 20 ist dazu ausgebildet, mehrere Überwachungsbereiche 22 zur Personenerkennung zu überwachen. Jeder Überwachungsbereich 22 kann sich entlang zumindest eines der mehreren Geländer 16 erstrecken. Bevorzugt können sich die Überwachungsbereiche 22 neben den Geländern 16 und/oder den Transportvorrichtungen 14 erstrecken, z. B. zu beiden Längsseiten der Geländer 16. Vorzugsweise können die Überwachungsbereiche 22 so dimensioniert sein, dass sie die Verstellbereiche der Geländer 16 überdecken. Beispielsweise kann jeder Überwachungsbereich 22 eine der Transportvorrichtungen 14 oder mindestens ein Geländer 16 umgeben.

Das Sensorsystem 20 kann bevorzugt für jeden Überwachungsbereich 22 eine eigene Sensorvorrichtung aufweisen, wie in Figur 1 dargestellt ist. Es ist allerdings auch möglich, dass eine Sensorvorrichtung des Sensorsystems 20 bspw. mehrere (z. B. benachbarte) oder alle Überwachungsbereiche 22 überwacht.

Die Personenerkennung kann bspw. durch Bilderkennung, Bewegungserkennung, Temperaturerkennung und/oder Akustikerkennung erfolgen. Bei der Personenerkennung kann erkannt werden, ob eine Person in einem der Überwachungsbereiche 22 anwesend ist oder nicht. Bevorzugt kann erkannt werden, in welchen Überwachungsbereichen eine Person anwesend ist und in welchen nicht.

Die Personenerkennung kann bevorzugt von dem Sensorsystem 20 und/oder von der Verarbeitungseinrichtung 26 durchgeführt werden. Bevorzugt ist das Sensorsystem 20 und/oder die Verarbeitungseinrichtung 26 so konfiguriert und/oder sind die Überwachungsbereiche 22 so angeordnet, dass eine Verstellung der Geländer 16 nicht dazu führt, dass fälschlicherweise eine Anwesenheit einer Person erkannt wird.

Das Sensorsystem 20 kann auf jegliche Weise zum Überwachen der Überwachungsbereiche 22 ausgeführt sein. Beispielsweise kann das Sensorsystem 20 mindestens eine Kamera-Sensorvorrichtung, mindestens eine Radar-Sensorvorrichtung, mindestens eine Lidar-Sensorvorrichtung, mindestens eine Wärmebildkamera-Sensorvorrichtung, mindestens einen Laser-Sensorvorrichtung, mindestens einen LED-Sensorvorrichtung, mindestens eine Abstandssensorvorrichtung, mindestens eine Bewegungssensorvorrichtung und/oder mindestens ein Mikrofon aufweisen.

Die mindestens eine Ausgabeeinrichtung 24 kann Warnsignale zu den Überwachungsbereichen 22 ausgeben. Die Warnsignale können bspw. akustisch und/oder visuell sein. Beispielsweise kann die mindestens eine Ausgabeeinrichtung 24 eine Anzeige, eine Signalleuchte und/oder einen Lautsprecher aufweisen. Bevorzugt ist jedem Überwachungsbereich 22 eine Ausgabeeinrichtung 24 zugeordnet, deren Ausgabe in den jeweiligen Überwachungsbereich 22 hinein gerichtet ist. Beispielsweise können die mehreren Ausgabeeinrichtungen 24 jeweils in einem Rand- und/oder Eckabschnitt eines jeweiligen Überwachungsbereichs 22 angeordnet sein.

Die Verarbeitungseinrichtung 26 ist dazu konfiguriert, die mehreren Transportvorrichtungen 14 zum gemeinsamen Verstellen der Geländer 16 zu betreiben. Das gemeinsame Verstellen ist abhängig von der Überwachung zur Personenerkennung in den Überwachungsbereichen 22 mittels des Sensorsystems 20. Beim gemeinsamen Verstellen können die Geländer 16 der mehreren Transportvorrichtungen 14 zeitgleich oder zumindest zeitlich überlappend verstellt werden. Zum gemeinsamen Verstellen kann die Verarbeitungseinrichtung 26 bspw. die jeweiligen Antriebseinrichtungen 18 entsprechend steuern bzw. mit diesen kommunizieren.

Die Verarbeitungseinrichtung 26 kann bspw. als eine zentrale Steuereinrichtung ausgeführt sein, wie in Figur 1 dargestellt ist. Alternativ kann die Verarbeitungseinrichtung 26 bspw. durch mehrere dezentrale Steuereinheiten gebildet sein, die miteinander kommunizieren, z. B. je einer Steuereinheit je Transportvorrichtung 14.

Die Verarbeitungseinrichtung 26 kann in Kommunikationsverbindung mit den Transportvorrichtungen 14, dem Steuersystem 20, den Antriebseinrichtungen 18 und/oder den Geländern 16 sein. Die Kommunikationsverbindung kann drahtlos oder kabelgebunden sein. Bevorzugt kann die Verarbeitungseinrichtung 26 Signale von dem Steuersystem 20 empfangen und Signale an die Antriebseinrichtungen 18 senden.

Nachfolgend ist beispielhaft erläutert, wie die Anlage 10 zum gemeinsamen Verstellen der Geländer 16 betrieben werden kann.

Zunächst kann die Verarbeitungseinrichtung 26 eine Anweisung zum Verstellen der Geländer 16 der Transportvorrichtungen 14 empfangen. Die Anweisung kann beispielsweise als ein Steuerbefehl empfangen werden. Die Anweisung kann beispielsweise von einer Benutzerschnittstelle der Anlage 10 empfangen werden. Ein Benutzer kann die Benutzerschnittstelle zum Ausgeben der Anweisung bedient haben. Alternativ kann die Anweisung beispielsweise von einem automatisch ablaufenden Programm zum Betrieb der Anlage 10 empfangen werden.

Sofern die Personenerkennung in den Überwachungsbereichen 22 ergibt, dass keine Person in den Überwachungsbereichen 22 ist, kann die Verarbeitungseinrichtung 26 die Geländer 16 zum gemeinsamen Verstellen gemäß der empfangenen Anweisung betreiben.

Die Überwachung der Überwachungsbereiche 22 mittels des Sensorsystems 20 kann während des Betriebs der Anlage 10 ständig aktiv sein. Bevorzugt wird die Überwachung der Überwachungsbereiche 22 mittels des Sensorsystems 20 dann bedingungsabhängig von der Verarbeitungseinrichtung 26 abgefragt und/oder ausgewertet, wenn die Geländer 16 verstellt werden sollen, d.h. bspw., wenn die Verarbeitungseinrichtung 26 die Anweisung zum Verstellen empfängt.

Alternativ kann die Überwachung der Überwachungsbereiche 22 mittels des Sensorsystems 20 von der Verarbeitungseinrichtung 26 aktiviert werden, wenn die Verarbeitungseinrichtung 26 die Anweisung zum Verstellen der Geländer 16. Beispielsweise kann das Sensorsystem 20 aus einem Standby-Betrieb oder aus einem ausgeschalteten Zustand aktiviert werden. Nach dem Verstellen der Geländer 16 kann das Sensorsystem 20 bevorzugt wieder deaktiviert werden, z. B. in einen Standby-Betrieb oder einen ausgeschalteten Zustand.

Wenn die Überwachung der Überwachungsbereiche 22 hingegen ergibt, dass eine Person in einem der Überwachungsbereiche 22 erkannt wurde, bestehen prinzipiell mehrere (Betriebs-) Optionen oder Möglichkeiten für die Verarbeitungseinrichtung 26. Bspw. kann die Verarbeitungseinrichtung 26 dazu konfiguriert sein, dass keines der Geländer 16 verstellt wird, wenn in irgendeinem der Überwachungsbereiche 22 eine Person erkannt wurde. Alternativ oder in einem anderen Betriebsmodus kann die Verarbeitungseinrichtung 26 dazu konfiguriert sein, nur diejenigen Geländer der mehreren Geländer 16 zum gemeinsamen Verstellen zu betreiben, in deren Überwachungsbereichen 22 keine Person erkannt wurde. In einer Weiterbildung kann die Verarbeitungseinrichtung 26 dazu konfiguriert sein, immer nur diejenigen Geländer der mehreren Geländer 16 zum gemeinsamen Verstellen zu betreiben, in deren Überwachungsbereichen 22 gerade keine Person erkannt wird, bis letztlich alle verstellbaren Geländer 16 verstellt wurden.

Auch während des Verstellens der Geländer 16 können die Überwachungsbereiche 22 weiter von dem Sensorsystem 20 überwacht werden. Wenn während des Verstellens eine Person in einem der Überwachungsbereiche 22 erkannt wird, kann die Verarbeitungseinrichtung 26 bspw. alle Verstellungen der Geländer 16 stoppen. Alternativ oder in einem anderen Betriebsmodus kann die Verarbeitungseinrichtung 26 ein Verstellen nur für dasjenige verstellbare Geländer 16, vorzugsweise temporär, zu stoppen, in dessen Überwachungsbereich eine Person während des Verstellens mittels des Sensorsystems 20 erkannt wird. In einer Weiterbildung kann das Verstellen dieses gestoppten Geländers 16 dann fortgesetzt werden, wenn mittels des Sensorsystems 20 erkannt wurde, dass die Person den jeweiligen Überwachungsbereich 22 wieder verlassen hat.

Vor und/oder während des Verstellens der Geländer 16 kann die Verarbeitungseinrichtung 26 die mindestens eine Ausgabeeinrichtung 24 zum Ausgeben eines Warnsignals betreiben. Alternativ oder zusätzlich kann die Verarbeitungseinrichtung 26 die mindestens eine Ausgabeeinrichtung 24 zum Ausgeben eines Warnsignals betreiben, wenn eine Person in einem der Überwachungsbereiche 22 erkannt wird.

Auf einen Transportbetrieb der Anlage 10, in dem die Transportvorrichtungen 14 Gegenstände, wie bspw. Behälter, transportieren, hat eine etwaige Überwachung der Überwachungsbereiche 22 bevorzugt keine Auswirkung oder ist erst gar nicht aktiviert. Anders formuliert kann die Verarbeitungseinrichtung 26, z. B. vor oder nach dem gemeinsamen Verstellen der Geländer 16, die mehreren Transportvorrichtungen 14 zum Transportieren von Gegenständen unabhängig von dem Überwachen der Überwachungsbereiche 22 mittels des Sensorsystems 20 betreiben.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Transportvorrichtungen, des Sensorsystems und/oder der Verarbeitungseinrichtung des unabhängigen Anspruchs 1 offenbart.

### Bezugszeichenliste

- 10: Anlage
- 12: Behandlungsvorrichtung
- 14: Transportvorrichtung
- 16: Geländer
- 18: Antriebseinrichtung
- 20: Sensorsystem
- 22: Überwachungsbereich
- 24: Ausgabeeinrichtung
- 26: Verarbeitungseinrichtung

## Patentansprüche

1. Anlage (10), vorzugsweise Industrieanlage, besonders bevorzugt Behälterbehandlungsanlage, wobei die Anlage (10) aufweist:
mehrere Transportvorrichtungen (14) zum Transportieren von Gegenständen, vorzugsweise Behältern, durch die Anlage (10), wobei die mehreren Transportvorrichtungen (14) verteilt in der Anlage (10) angeordnet sind und jeweils mindestens ein verstellbares Geländer (16) zur Transportbreiteneinstellung aufweisen;
ein Sensorsystem (20), das dazu ausgebildet ist, mehrere Überwachungsbereiche (22), die sich jeweils entlang eines der mehreren verstellbaren Geländer (16) erstrecken, zur Personenerkennung zu überwachen; und
eine Verarbeitungseinrichtung (26), die dazu konfiguriert ist, die mehreren Transportvorrichtungen (14) zum gemeinsamen Verstellen der verstellbaren Geländer (16) in Abhängigkeit von der Überwachung der mehreren Überwachungsbereiche (22) mittels des Sensorsystems (20) zu betreiben.

2. Anlage (10) nach Anspruch 1, wobei:
die Verarbeitungseinrichtung (26) ferner dazu konfiguriert ist, die verstellbaren Geländer (16) nur dann zum gemeinsamen Verstellen zu betreiben, wenn keine Person in den mehreren Überwachungsbereichen (22) mittels des Sensorsystems (20) erkannt wurde.

3. Anlage (10) nach Anspruch 1 oder Anspruch 2, wobei:
die Verarbeitungseinrichtung (26) ferner dazu konfiguriert ist, nur diejenigen verstellbaren Geländer (16) zum gemeinsamen Verstellen zu betreiben, in deren Überwachungsbereichen (22) keine Person mittels des Sensorsystems (20) erkannt wurde; und/oder
die Verarbeitungseinrichtung (26) ferner dazu konfiguriert ist, immer nur diejenigen verstellbaren Geländer (16) zum gemeinsamen Verstellen zu betreiben, in deren Überwachungsbereichen (22) gerade keine Person mittels des Sensorsystems (20) erkannt wird, bis letztlich alle verstellbaren Geländer (16) verstellt wurden.

4. Anlage (10) nach einem der vorherigen Ansprüche, ferner aufweisend:
mindestens eine Ausgabeeinrichtung (24) zum Ausgeben von Warnsignalen zu den mehreren Überwachungsbereichen (22),
wobei die Verarbeitungseinrichtung (26) ferner dazu konfiguriert ist:
die mindestens eine Ausgabeeinrichtung (24) zum Ausgeben eines Warnsignals vor und/oder während des gemeinsamen Verstellens der verstellbaren Geländer (16) zu betreiben; und/oder
die mindestens eine Ausgabeeinrichtung (24) zum Ausgeben eines Warnsignals bei Erkennung einer Person in einem der mehreren Überwachungsbereiche (22) zu betreiben.

5. Anlage (10) nach einem der vorherigen Ansprüche, wobei:
die Verarbeitungseinrichtung (26) ferner dazu konfiguriert ist, das gemeinsame Verstellen der verstellbaren Geländer (16) zu stoppen, wenn während des gemeinsamen Verstellens eine Person in einem der mehreren Überwachungsbereiche (22) mittels des Sensorsystems (20) erkannt wird.

6. Anlage (10) nach einem der vorherigen Ansprüche, wobei:
die Verarbeitungseinrichtung (26) ferner dazu konfiguriert ist, während des gemeinsamen Verstellens der verstellbaren Geländer (16) ein Verstellen nur für dasjenige verstellbare Geländer (16), vorzugsweise temporär, zu stoppen, in dessen Überwachungsbereich (22) eine Person während des Verstellens mittels des Sensorsystems (20) erkannt wird, und vorzugsweise fortzusetzen, wenn mittels des Sensorsystems (20) erkannt wurde, dass die Person dessen Überwachungsbereich (22) wieder verlassen hat.

7. Anlage (10) nach einem der vorherigen Ansprüche, wobei:
die Verarbeitungseinrichtung (26) ferner dazu konfiguriert ist, die mehreren Transportvorrichtungen (14) zum Transportieren von Gegenständen, vorzugsweise Behältern, unabhängig von dem Überwachen der mehreren Überwachungsbereiche (22) mittels des Sensorsystems (20) zu betreiben.

8. Anlage (10) nach einem der vorherigen Ansprüche, wobei:
die Verarbeitungseinrichtung (26) ferner dazu konfiguriert ist, das Sensorsystem (20) zum Überwachen der mehreren Überwachungsbereiche (22) zu aktivieren, wenn die Verarbeitungseinrichtung (26) eine Anweisung zum Verstellen der verstellbaren Geländer (16) empfängt, vorzugsweise von einer Benutzerschnittstelle; und/oder
die Verarbeitungseinrichtung (26) dazu konfiguriert ist, das Sensorsystem (20) zum Beenden des Überwachens der mehreren Überwachungsbereiche (22) zu deaktivieren, wenn ein gemeinsames Verstellen der verstellbaren Geländer (16) beendet wurde.

9. Verfahren zum Betreiben einer Anlage (10), vorzugsweise Industrieanlage oder Behälterbehandlungsanlage oder nach einem der vorherigen Ansprüche, wobei das Verfahren aufweist:
Empfangen einer Anweisung zum Verstellen von verstellbaren Geländern (16) mehrerer Transportvorrichtungen (14), die verteilt in der Anlage (10) angeordnet sind, mittels einer Verarbeitungseinrichtung (26);
Überwachen von mehreren Überwachungsbereichen (22), die sich entlang der verstellbaren Geländer (16) erstrecken, mittels eines Sensorsystems (20) zur Personenerkennung, vorzugsweise in Reaktion auf das Empfangen der Anweisung; und
Betreiben der mehreren Transportvorrichtungen (14) zum gemeinsamen Verstellen der verstellbaren Geländer (16) mittels der Verarbeitungseinrichtung (26) in Abhängigkeit von dem Überwachen der mehreren Überwachungsbereiche (22) und in Reaktion auf das Empfangen der Anweisung.

10. Verfahren nach Anspruch 9, wobei die mehreren Transportvorrichtungen (14) zum gemeinsamen Verstellen der verstellbaren Geländer (16) mittels der Verarbeitungseinrichtung (26) derart betrieben werden, dass:
die verstellbaren Geländer (16) nur dann zum gemeinsamen Verstellen betrieben werden, wenn keine Person in den mehreren Überwachungsbereichen (22) mittels des Sensorsystems (20) erkannt wurde; und/oder
nur diejenigen verstellbaren Geländer (16) zum gemeinsamen Verstellen betrieben werden, in deren Überwachungsbereichen (22) keine Person mittels des Sensorsystems (20) erkannt wurde; und/oder
immer nur diejenigen verstellbaren Geländer (16) zum gemeinsamen Verstellen betrieben werden, in deren Überwachungsbereichen (22) gerade keine Person mittels des Sensorsystems (20) erkannt wird, bis letztlich alle verstellbaren Geländer (16) verstellt wurden.

11. Verfahren nach Anspruch 9 oder Anspruch 10, wobei die mehreren Transportvorrichtungen (14) zum gemeinsamen Verstellen der verstellbaren Geländer (16) mittels der Verarbeitungseinrichtung (26) derart betrieben werden, dass:
das gemeinsame Verstellen der verstellbaren Geländer (16) gestoppt wird, wenn während des gemeinsamen Verstellens eine Person in einem der mehreren Überwachungsbereiche (22) mittels des Sensorsystems (20) erkannt wird; und/oder
während des gemeinsamen Verstellens der verstellbaren Geländer (16) ein Verstellen nur für dasjenige verstellbare Geländer (16), vorzugsweise temporär, gestoppt, in dessen Überwachungsbereich (22) eine Person während des Verstellens mittels des Sensorsystems (20) erkannt wird, und vorzugsweise fortzusetzen, wenn mittels des Sensorsystems (20) erkannt wurde, dass die Person dessen Überwachungsbereich (22) wieder verlassen hat.

12. Verfahren nach einem der Ansprüche 9 bis 11, ferner aufweisend mindestens eines von:
Betreiben der mehreren Transportvorrichtungen (14) zum Transportieren von Gegenständen, vorzugsweise Behältern, mittels der Verarbeitungseinrichtung (26) unabhängig von dem Überwachen mittels des Sensorsystems (20);
Aktivieren des Sensorsystems (20) zum Überwachen der mehreren Überwachungsbereiche (22) mittels der Verarbeitungseinrichtung (26) in Reaktion auf das Empfangen der Anweisung;
Deaktivieren des Sensorsystems (20) zum Beenden des Überwachens der mehreren Überwachungsbereiche (22) mittels der Verarbeitungseinrichtung (26) in Reaktion auf ein Beenden des gemeinsamen Verstellens der verstellbaren Geländer (16);
Ausgeben eines Warnsignals zu den mehreren Überwachungsbereichen (22) mittels mindestens einer Ausgabeeinrichtung (24) vor und/oder während des gemeinsamen Verstellens der verstellbaren Geländer (16); und
Ausgeben eines Warnsignals mittels mindestens einer Ausgabeeinrichtung (24) bei Erkennung einer Person in einem der mehreren Überwachungsbereiche (22) mittels des Sensorsystems (20).

13. Anlage (10) nach einem der Ansprüche 1 bis 8 oder Verfahren nach einem der Ansprüche 9 bis 12, wobei:
das Sensorsystem (20) mindestens eine Kamera-Sensorvorrichtung, mindestens eine Radar-Sensorvorrichtung, mindestens eine Lidar-Sensorvorrichtung, mindestens eine Wärmebildkamera-Sensorvorrichtung, mindestens einen Laser-Sensorvorrichtung, mindestens einen LED-Sensorvorrichtung, mindestens eine Abstandssensorvorrichtung, mindestens eine Bewegungssensorvorrichtung und/oder mindestens ein Mikrofon aufweist; und/oder
das Sensorsystem (20) für jeden Überwachungsbereich (22) mindestens eine Sensorvorrichtung aufweist.

14. Anlage (10) nach einem der Ansprüche 1 bis 8 oder 13 oder Verfahren nach einem der Ansprüche 9 bis 13, wobei:
die mehreren Transportvorrichtungen (14) zumindest teilweise mehrgassig sind und die verstellbaren Geländer (16) verstellbare Gassengeländer der mehrgassigen Transportvorrichtung/-en aufweisen; und/oder
die verstellbaren Geländer (16) verstellbare Außengeländer aufweisen.

15. Anlage (10) nach einem der Ansprüche 1 bis 8, 13 oder 14 oder Verfahren nach einem der Ansprüche 9 bis 14, wobei:
das Sensorsystem (20) und/oder die Verarbeitungseinrichtung (26) so konfiguriert ist und/oder die mehreren Überwachungsbereiche (22) so angeordnet sind, dass eine Verstellung der verstellbaren Geländer (16) zu keiner Personenerkennung führt; und/oder
die verstellbaren Geländer (16) jeweils einen Verstellbereich, in dem sie verstellbar sind, aufweisen und die Überwachungsbereiche (22) so angeordnet sind, dass sie den Verstellbereichen entsprechen oder diese überdecken.
